Europäisches Patentamt

European Patent Office

Office européen des brevets

(19)

(11) **EP 0 971 202 B1**

(12) **EUROPEAN PATENT SPECIFICATION**

(45) Date of publication and mention
of the grant of the patent:
**16.03.2005 Bulletin 2005/11**

(51) Int Cl.⁷: $G01B\ 7/00$

(21) Application number: **99113159.0**

(22) Date of filing: **07.07.1999**

(54) **Measuring apparatus**

Messapparat

Appareil de mesure

(84) Designated Contracting States:
**DE GB NL**

(30) Priority: **08.07.1998 JP 20859298**

(43) Date of publication of application:
**12.01.2000 Bulletin 2000/02**

(73) Proprietor: **CANON KABUSHIKI KAISHA
Ohta-ku Tokyo 146-8501 (JP)**

(72) Inventor: **Kawamata, Naoki
Ohta-ku, Tokyo (JP)**

(74) Representative:
**Pellmann, Hans-Bernd, Dipl.-Ing. et al
Patentanwaltsbüro
Tiedtke-Bühling-Kinne & Partner
Bavariaring 4-6
80336 München (DE)**

(56) References cited:
**EP-A- 0 425 912        EP-A- 0 660 209
GB-A- 2 240 496        US-A- 5 621 668
US-A- 5 761 173        US-A- 5 771 179
US-A- 5 805 544        US-A- 5 819 103**

- **PATENT ABSTRACTS OF JAPAN vol. 1997, no. 05, 30 May 1997 (1997-05-30) & JP 09 008946 A (HITACHI LTD), 10 January 1997 (1997-01-10)**
- **PATENT ABSTRACTS OF JAPAN vol. 1999, no. 09, 30 July 1999 (1999-07-30) & JP 11 110265 A (FUJITSU LTD), 23 April 1999 (1999-04-23)**
- **PATENT ABSTRACTS OF JAPAN vol. 1996, no. 12, 26 December 1996 (1996-12-26) & JP 08 219815 A (YOKOGAWA ELECTRIC CORP), 30 August 1996 (1996-08-30)**
- **PATENT ABSTRACTS OF JAPAN vol. 017, no. 505 (P-1611), 10 September 1993 (1993-09-10) & JP 05 128256 A (SUMITOMO LIGHT METAL IND LTD;OTHERS: 01), 25 May 1993 (1993-05-25)**
- **PATENT ABSTRACTS OF JAPAN vol. 1996, no. 11, 29 November 1996 (1996-11-29) & JP 08 172485 A (FUJITSU LTD), 2 July 1996 (1996-07-02)**

# EP 0 971 202 B1

**Description**

## BACKGROUND OF THE INVENTION

Field of the Invention

The present invention relates to a measuring apparatus according to the preamble of claim 1.

Related Background Art

A conventional measuring device of this type merely outputs the measurement result with its unique precision, and the precision limit depends on the design of the measuring device itself. For example, in a measuring device that outputs a periodic measurement signal, the resolution can be improved by dividing the measurement signal using an electrical means, but linearity or the like over the entire measurement range depends on the precision of the measuring device itself. For this reason, in order to improve precision, the dimensional precision of the measuring device is improved to reduce variations.

As a means for correcting the precision, error information from a measuring prototype is appended as a datasheet or floppy information, and correction calculations may be done based on this information.

A measuring device is normally used together with a drive device, and requires adjustment that matches the characteristics of the drive device to exhibit high precision. For this reason, in order to eliminate the influences of variations of the characteristics of the drive device, adjustment that matches each drive device is required.

In order to facilitate adjustment, a method of using a measuring device assuming the worst case of variations is used. That is, a motor as a drive device converts current into torque (force). This conversion ratio (torque constant) suffers variations, and adjustment corresponding to the conversion ratio is required to improve performance. When adjustment cannot be done, the performance of the measuring device is lowered to the level at which the device can be used even in the event of worst variations.

Information that pertains to the measuring device is recorded by, e.g., a method of assigning serial numbers to devices in the manufacture, and attaching simple labels thereto. However, a function of adding information generated during use is hard to implement, and such detailed information to be managed is normally recorded in a register in relation to the individual measuring devices.

Since the conventional measuring device has the aforementioned arrangement, it is not easy to improve precision of the measuring device since such improvement results in an increase in parts cost and difficulty in the manufacture. Also, individual adjustment results in an increase in manufacturing cost. If the measuring device is adjusted assuming the worst case to omit individual adjustment, the original performance of the device cannot be exhibited.

Since information management using a register or the like may suffer recording errors and missing links between the measuring devices and recorded information, much energy is required to accurately manage information.

Even when required information is recorded on the register, the register and the measuring device must be compared with each other to use such information, and it is not easy to acquire the information. For example, even when accumulative precision information is recorded on the register, when the measuring device is used in combination with other devices, information with respect to other devices must be reinput every time the measuring device is used together with a different device.

When the term of guarantee is set, if there is no means for detecting the actual use time, e.g., the energizing time (power-ON time), since even the period the product has been in stock is included in the term of guarantee, the user cannot effectively use the term of guarantee. Also, trouble shooting is difficult for the manufacturer.

Some parts of the measuring device such as a laser diode and the like may cause a trouble with a certain probability depending on the use period (energizing time). Upon inspecting and analyzing such trouble, the time from when the power switch is turned on until it is turned off must be recorded to detect the energizing time every time the measuring device is used. As a result, even if the delivery date can be specified, the actual use time before the trouble occurred cannot be determined.

Reference EP-A 0 660 209 discloses a device and a method for transmitting data derivable from a measuring device. The device according to this state of the art includes a memory device which is adapted to store data and, in particular, error information to be used for an extemal signal processing device.

## SUMMARY OF THE INVENTION

The present invention has been made to solve the aforementioned problems, and has as its object to provide a measuring unit which can manage various kinds of information together with a measuring device.

It is furthermore the object of the present invention to provide a measuring apparatus which has a simple arrangement and can accurately execute measurement by each apparatus even when individual measuring apparatuses have errors from a prototype. The object is solved by an apparatus having the combination of the features of claim 1. Further developments are defined in the dependent claims.

Other preferable forms of the present invention will become apparent from the following description of the embodiments.

BRIEF DESCRIPTION OF THE DRAWINGS

Fig. 1 is a block diagram showing the arrangement of a management device of a measuring device according to the first embodiment of the present invention;

Fig. 2 is an explanatory view showing accumulative errors;

Fig. 3 is a correction table showing accumulative errors in units of degrees;

Fig. 4 is a table showing a storage pattern of information to be stored in the manufacture according to the third embodiment of the present invention;

Fig. 5 is an explanatory view of information which changes along with an elapse of time according to the fourth embodiment of the present invention; and

Fig. 6 is a flow chart for explaining storage of the energizing time according to the fifth embodiment of the present invention.

DETAILED DESCRIPTION OF THE PREFERRED EMBODIMENTS

Preferred embodiments of the present invention will be described hereinafter with reference to the accompanying drawings. In the following description, rotational displacement will be explained as the object to be measured, but the present invention can be applied to rectilinear displacement.

First Embodiment

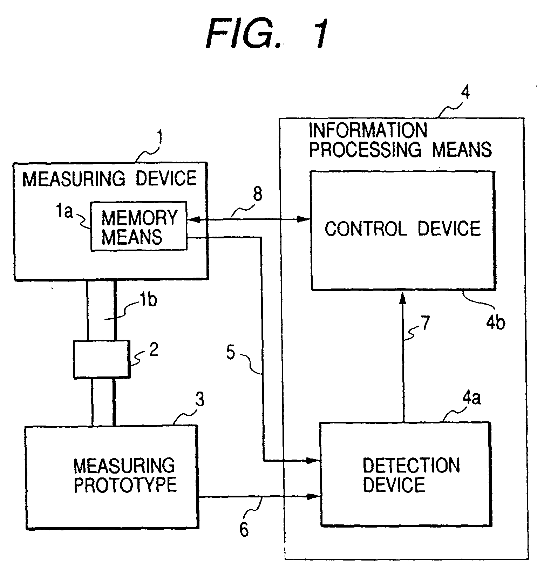

Fig. 1 is a block diagram showing a measuring device as a measuring unit and its management device according to the first embodiment of the present invention. Referring to Fig. 1, a measuring device 1 comprises a memory means 1a. The measuring device 1 generates a periodic output signal as a displacement signal in accordance with the rotation amount of a shaft 1b. As the memory means 1a, a nonvolatile memory means, which can hold its memory contents without any power supply, and can be arbitrarily rewritten and added is used.

A connector 2 connects the measuring device and a measuring prototype 3. An information processing means 4 serves as a management unit for storing information from the measuring prototype 3 in the nonvolatile memory means 1a, and reading information stored in the nonvolatile memory means. The information processing means 4 and measuring device 1 are signally connected to each other via connection lines 5 and 8, and they can be signally separated by disconnecting these connection lines.

As the nonvolatile memory means 1a, a flash memory, EEPROM, NOVRAM, or the like is used. The information processing means 4 comprises a detection device 4a for detecting the difference between the outputs from the measuring device 1 and measuring prototype 3, and a control device 4b has a function of processing information from the detection device 4a, and writing or reading out the processed information in or from the nonvolatile memory means 1a.

The rotation shafts of the measuring device 1 and measuring prototype 3 for outputting a periodic signal like the measuring device 1 are connected by the connector 2, and they are driven together by a drive device (not shown). Periodic signal outputs corresponding to their rotation amounts are input to the detection device 4a via the connection lines 5 and 6. The output from the detection device 4a is input to the control device 4b via a connection line 7.

The output difference (which should be zero) at the respective rotation angles during one rotation of the measuring device 1 and measuring prototype 3, i.e., that during one revolution is an accumulative error $E(\theta)$. The accumulative error $E(\theta)$ has periodicity, and is normally expressed by a Fourier coefficient given by:

$$E(\theta) = \sum_{n=1}^{\infty} A_n \, Sin \, (\theta \times n + \phi_n) \qquad \ldots \text{Equation (1)}$$

where n is the order, $\phi_n$ is the phase offset, $\theta$ is the measured angle, and $A_n$ is the amplitude.

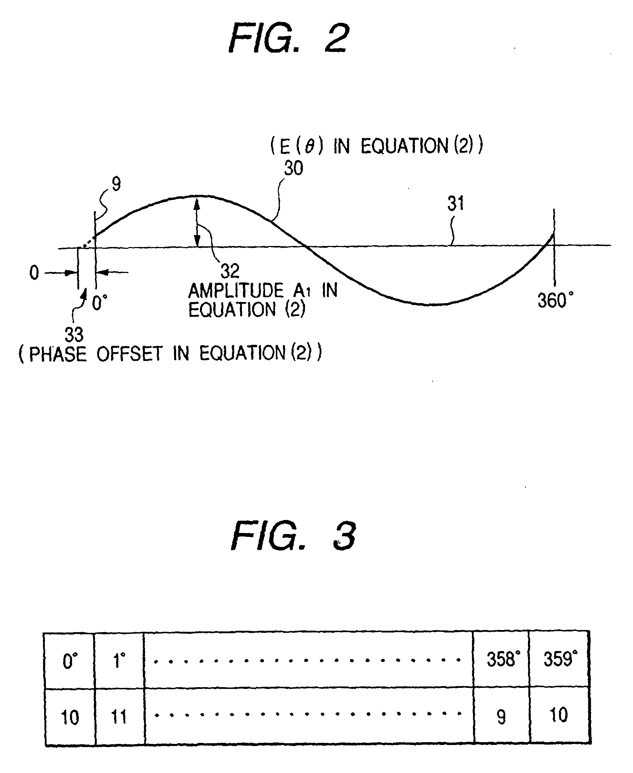

If the error is limited to dominant components, n = 6 is sufficient in practice. To make the description simple, Fig. 2 shows a case of n = 1.

Fig. 2 shows the accumulative error $E(\theta)$, which is a periodic signal having one revolution as one period. The measuring device 1 has a reference position 9. The measuring device 1 that measures the rotation angle has one reference position signal per revolution, and outputs a measurement value with reference to this signal.

A deviation from a line 31 set when the output of the measuring prototype of the accumulative error $E(\theta)$ represents nonlinearity, which impairs precision. Conventionally, such graph is appended as precision information of the measuring device 1. The user uses such information to correct measurement data as needed, but the correction must be done by the user.

The control device 4b writes the accumulative error $E(\theta)$ shown in Fig. 2 in the nonvolatile memory means 1a via the connection line 8. The contents written in the memory means include angle information, and error information from the measuring prototype at that angle.

Fig. 3 is a correction table showing error information using a set of values that represent vertical magnitudes in Fig. 2 in units of degrees. The upper column shows angles (in unitary degree increments), and the lower column shows error information between the measuring device 1 and measuring prototype 3 at that angle. In the correction method, when the measuring device 1 is at a 1° position, error information is 11, as shown in Fig. 3. Hence, when the measuring device indicates 1°, that value is larger than the true value. The error can be corrected by subtracting this error information from the measurement value.

As described above, the measuring device 1 whose accumulative error $E(\theta)$ is written in the nonvolatile memory means 1a is temporarily disconnected from the information processing means 4, and is then used in combination with an arbitrary signal processing device for measuring rotation amount.

This signal processing device loads the information shown in Fig. 3 in advance from the nonvolatile memory means 1a of the measuring device 1, thus correcting past accumulative errors $E(\theta)$.

More specifically, this signal processing device calculates and measures displacement angle by processing a displacement signal from the measuring device 1 by a normal method, then acquires error information from the correction table obtained from the measuring device 1, and subtracts it from the measured angle to obtain a true displacement angle.

In this case, the user need not be conscious of such processes. Since the measuring device itself saves the aforementioned information in the nonvolatile memory means 1a, when the combination with a signal processing device is changed, e.g., when the measuring device 1 is connected to another signal processing device, the user can obtain the same effect without any additional load. When the measuring device 1 detects rectilinear displacement, the accumulative error represents the output difference from the prototype for one stroke.

Second Embodiment

In the first embodiment, error information is saved in the memory means 1a in the form of the correction table shown in Fig. 3. In this case, when smaller angle increments are set to increase the information volume, the correction table size increases.

On the other hand, the error information has periodicity, as in equation (1) above. In case of the first order, i. e., n = 1 alone, since the error is given by:

$$E(\theta) = A_1 \cdot Sin\,(\theta \times 1 + \phi_1)$$

if the amplitude and phase offsets are available, the original information can be reproduced. That is, if $A_1$ and $\phi_1$ are available, $E(\theta)$ at $\theta$ can be obtained by calculation.

In the second embodiment, a method of using the amplitude and phase offset will be explained. When the error information is represented by Fig. 2, the accumulative error is given by:

$$E(\theta) = A_1\,Sin\,(\theta + \phi_1) \hspace{3cm} \text{Equation (2)}$$

where $A_1$ is the amplitude (32 in Fig. 2), $\phi_1$ is the phase offset (33 in Fig. 2), $\theta$ is the measured angle, and $E(\theta)$ is the accumulative error at angle $\theta$.

When the amplitude $A_1$ and phase offset $\phi_1$ are stored in the memory means 1a, the control device 4b can load the values of the amplitude $A_1$ and phase offset $\phi_1$, and can reproduce the accumulative error $E(\theta)$ from equation

(2). For example, the corrected angle θr at the measured angle θ is given by:

$$\theta_r = \theta - E(\theta) \qquad \text{Equation (3)}$$

Hence, equation (2) is stored in the memory means 1a, and the signal processing device reads out that equation, and calculates equation (3) at the time of measurement.

Third Embodiment

When the manufacturing date, manufacturing number, lot information of principal parts, and the like are non-rewritably recorded on the nonvolatile memory means 1a (e.g., recorded on a ROM) as management information in the manufacture, the control device 4b can use such stored information anytime. For example, when the control device 4b determines that the device of interest has a manufacturing date before a specific date, it can produce a warning.

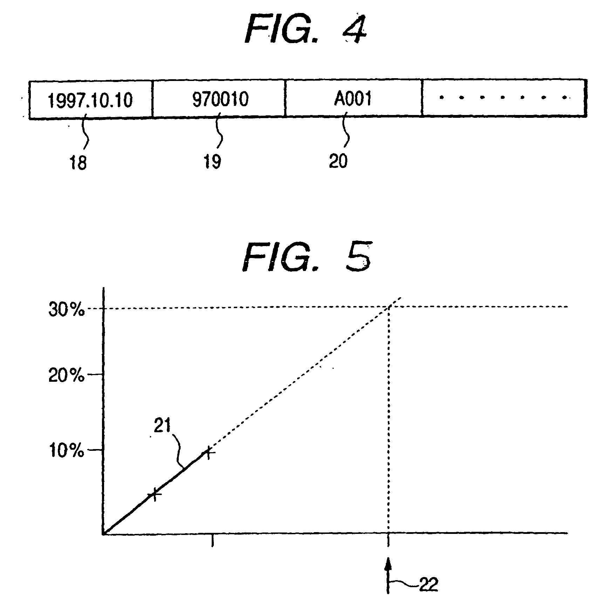

Fig. 4 shows a storage pattern, which includes a manufacturing date 18, manufacturing number 19, and lot information 20 of principal parts.

Fourth Embodiment

When information which changes along with an elapse of time is stored as management information in the nonvolatile memory means 1a, since exchange or maintenance can be done by predicting its timing, the trouble duration in which the device cannot be used can be minimized.

Especially, some parts used in the measuring device 1 degrade along with an elapse of time. For example, since a laser diode degrades along with an elapse of time, and its emission amount decreases, a circuit for increasing currents to obtain a constant emission amount, i.e., for compensating for insufficient emission amount is assembled in the laser diode. When this current value has exceeded a given amount, the laser diode cannot be used and must be exchanged.

Thus, the adjustment value of the laser current is stored in the nonvolatile memory means 1a upon delivery of the product. The signal processing device or control device 4b fetches the storage value of the nonvolatile memory means 1a in advance, as in the first, second, and third embodiments, monitors the laser current using a detection system (not shown), and obtains an accumulative use time from a timer means (not shown) and additionally records that time in the memory means 1a, every time the laser current has increased by a given amount from the storage value.

Fig. 5 shows the increase tendency of the laser current. The ordinate plots the rate of increase in current, and the abscissa plots the accumulative time. Assuming that the laser diode is to be exchanged when its laser current has increased 30%, an exchange timing 22 can be predicted by extending a slope 21 of the accumulative time.

On the other hand, the positional relationship among optical parts may collapse along with an elapse of time due to variations of temperature and humidity. Also, the characteristics of electrical parts may change along with an elapse of time. Such variations appear as variations of the output signal of the measuring device 1. More specifically, such variations appear as deviations of the amplitude and DC component of the output signal from reference values. When the variations of the output signal fall within a certain range, they can be corrected by the signal processing device or control device 4b. However, when such variations have reached limits, the corresponding parts cannot be used.

Hence, when such variations are monitored by a detection system (not shown) and are recorded as in the variations of the laser current, the correction limit timing can be predicted.

These recording data are used for the signal processing device or control device 4b to produce a warning when they have exceeded prescribed values.

Fifth Embodiment

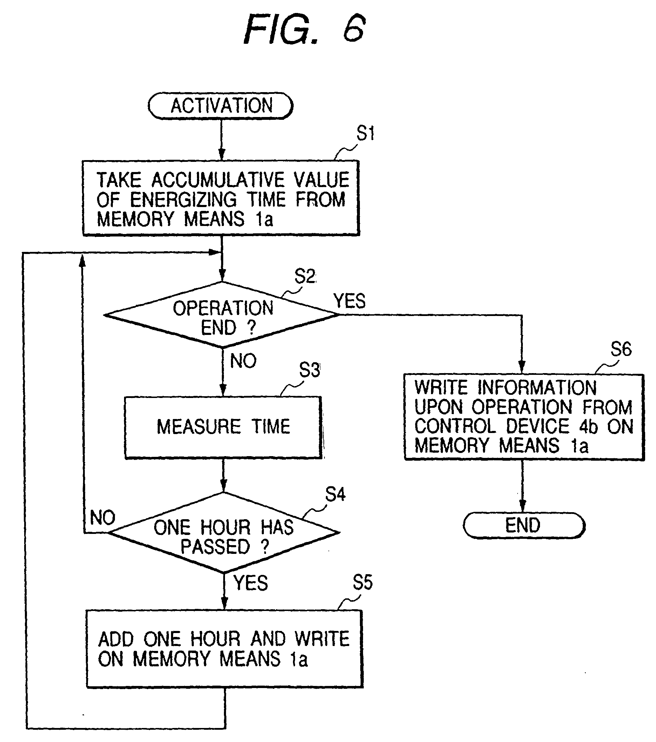

Fig. 6 is a flow chart showing the sequence for updating the accumulative value of the energizing time. The signal processing device or control device 13b takes the accumulative value of the energizing time from the nonvolatile memory means 1a of the measuring device 1 in advance upon activation (step S1), and checks if the operation is to end (step S2). If NO in step S2, the signal processing device or control device measures an elapse of time after activation (step S3).

The signal processing device or control device checks if a predetermined period of time, e.g., one hour, has passed (step S4). If NO in step S4, the signal processing device or control device repeats the processes in steps S2 to S4; if YES in step 54, the device adds one hour and writes the new value on the nonvolatile memory means 1a to update the storage value (step S5). If more accurate value is required, the time may be stored in units of minutes in addition to hours.

On the other hand, if YES is determined in step S2, information upon operation from the control device 4b is written in the nonvolatile memory means 1a (step S6), thus ending the operation.

The nonvolatile memory means 1a saves the accumulative time so far in units of hours and minutes, and upon next activation, the calculation of the accumulative time is started based on the saved value. As a result, the accumulative value of the energizing time can be accurately detected. When the term of guarantee of a given product is set, if this accumulative time is used, the time the user has actually energized the product can be guaranteed. As a result, after the user purchased the product, the stock time can be excluded, and the user can enjoy long-term guarantee.

When the nonvolatile memory means 1a stores the dates, contents, and the like of parts exchange and adjustment, information can be managed more accurately.

The management information of the aforementioned embodiments can be stored in appropriate combinations.

To restate, the memory means is provided to the measuring unit and drive unit, and an external signal processing device or control device can at least read out and use management information from that memory means. Hence, the individual measurement unit and drive unit can easily correct any accumulative error, use information in the manufacture, fetch torque constant as a parameter of the control device, manage an increase in current value, manage a change in output signal, manage the accumulative value of the energizing time, and so forth. As a result, for example,

1) When the accumulative error is obtained in advance and stored as difference information between the measuring device and prototype, it can be corrected using the difference information, and accumulative precision equivalent to that of the prototype can be obtained irrespective of individual differences of the accumulative error in units of devices.

2) Information in the manufacture can be written in the nonvolatile memory means, and can be confirmed by reading it out as needed. Hence, operations can be changed in units of lots.

3) Since the torque constant of the drive device can be accurately set, high-precision alignment control is realized.

4) When an increase in current value is checked in combination with time information, the exchange timing of degraded parts (e.g., a laser diode) can be predicted, and time loss required for exchange can be minimized.

5) Since the tendency of output signal variations can be checked, the correction limit timing by the control device can be predicted. If the correction limit has been reached, since re-adjustment time, exchange time, and the like are required, such losses can be minimized.

6) A service that sets the term of guarantee using the energizing time independently of the delivery date can be provided.

7) The maintenance tendency can be easily recognized. By collating with information in the manufacture, the ratio of troubles in units of lots or the like can be determined.

In addition, by providing a memory means for storing the accumulative error, the accumulative error can be easily managed in units of measuring devices, thus allowing accurate measurements.

## Claims

1. An apparatus for performing measurement of rectilinear or rotational displacement of an object, comprising:

an external signal processing device (4);
a measuring unit (1) for outputting a displacement signal upon rectilinear or rotational displacement of the object said measuring unit (1) being able to be signally disconnected/connected from/to the external signal processing device (4), and being adapted to output the displacement signal to the connected signal processing device (4); and
memory means (1a) provided in said measuring unit (1), said memory means (1a) being able to store at least management information that pertains to said measuring unit (1), and at least the management information being able to be read out from said memory means (1a) by access from the external signal processing device (4),

**characterized in that**
said external signal processing device (4) includes a management unit (4a) having a detection function of obtaining error information by comparing output signals from said measuring unit (1) and a measuring prototype (3), and a control function of controlling to write the error information in said memory means (1a) of said measuring unit (1) as management information, and to read out the management information therefrom.

2. An apparatus according to claim 1, wherein said memory means (1a) can hold memory contents without any power supply, and the contents of said memory means (1a) can be arbitrarily rewritten and added.

3. An apparatus according to claim 1, wherein said memory means (1a) non-rewritably stores management information determined in the manufacture of said measuring unit (1), or stores management information which is rewritten or added by the external signal processing device (4) according to a use condition.

4. An apparatus according to claim 1, wherein the management information includes at least one of a manufacturing date, manufacturing number, and parts information of said measuring unit (1).

5. An apparatus according to claim 1, wherein the management information includes information that pertains to said measuring unit (1) and changes along with an elapse of time.

6. An apparatus according to claim 1, wherein the management information includes accumulative information of an energizing time to said measuring unit (1).

7. An apparatus according to claim 1, wherein the displacement signal outputs a periodic signal upon the rectilinear or rotational displacement to the external signal processing device (4), and the management information includes accumulative error information when said measuring unit (1) is measured by using a measuring prototype (3).

8. An apparatus according to claim 1, wherein said memory means stores information of an accumulative error of the displacement signal output from said measuring unit (1) as the management information.

**Patentansprüche**

1. Vorrichtung zur Durchführung einer Messung einer geradlinigen oder drehenden Verlagerung eines Objekts, mit:

einer externen Signalverarbeitungsanordnung (4);
einer Messeinheit (1) zum Ausgeben eines Verlagerungssignals bei geradliniger oder drehender Verlagerung des Objekts, wobei die Messeinheit (1) fähig ist, Signal-bezogen getrennt/verbunden von/mit der externen Signalverarbeitungsanordnung (4) zu sein, und angepasst ist, das Verlagerungssignal an die verbundene Signalverarbeitungsanordnung (4) auszugeben; und
einer Speichereinrichtung (1a), die in der Messeinheit (1) bereitgestellt ist, wobei die Speichereinrichtung (1a) fähig ist, zumindest Verwaltungsinformationen zu speichern, die die Messeinheit (1) betreffen, und wobei zumindest die Verwaltungsinformationen durch Zugriff von der externen Signalverarbeitungsanordnung (4) aus der Speichereinrichtung (1a) ausgelesen werden können,

**dadurch gekennzeichnet, dass**
die externe Signalverarbeitungsanordnung(4) eine Verwaltungseinheit (4a) mit einer Erfassungsfunktion zum Erhalten von Fehlerinformationen durch Vergleichen von Ausgabesignalen von der Messeinheit (1) und einem Messprototyps (3) sowie eine Steuerfunktion zum Steuern umfasst, um die Fehlerinformationen als Verwaltungsinformationen in die Speichereinrichtung (1a) der Messeinheit (1) zu schreiben, und um die Verwaltungsinformationen daraus auszulesen.

2. Vorrichtung gemäß Anspruch 1, bei der die Speichereinrichtung (1a) Speicherinhalte ohne jede Energieversorgung halten kann und die Inhalte der Speichereinrichtung (1a) beliebig umgeschrieben und hinzugefügt werden können.

3. Vorrichtung gemäß Anspruch 1, bei der die Speichereinrichtung (1a) Verwaltungsinformationen, die bei der Herstellung der Messeinheit (1) bestimmt werden, auf nicht umschreibbare Weise speichert, oder Verwaltungsinformationen, die von der externen Signalverarbeitungsanordnung (4) umgeschrieben oder hinzugefügt werden, gemäß einem Verwendungszustand speichert.

4. Vorrichtung gemäß Anspruch 1, bei der die Verwaltungsinformationen eine Herstellungszeitangabe und/oder eine Herstellungsnummer und/oder Teile von Informationen der Messeinheit (1) umfassen.

**5.** Vorrichtung gemäß Anspruch 1, bei der die Verwaltungsinformationen Informationen umfassen, die die Messeinheit (1) betreffen und sich mit einem Zeitverlauf ändern.

**6.** Vorrichtung gemäß Anspruch 1, bei der die Verwaltungsinformationen kumulative Informationen einer Ansteuerungszeit an der Messeinheit (1) umfassen.

**7.** Vorrichtung gemäß Anspruch 1, bei der das Verlagerungssignal bei der geradlinigen oder drehenden Verlagerung ein periodisches Signal an die externe Signalverarbeitungsanordnung (4) ausgibt und die Verwaltungsinformationen kumulative Fehlerinformationen umfassen, wenn die Messeinheit (1) durch Verwendung eines Messprototyps (3) gemessen wird.

**8.** Vorrichtung gemäß Anspruch 1, bei der die Speichereinrichtung als die Verwaltungsinformationen Informationen über einen kumulativen Fehler des Verlagerungssignals speichert, das von der Messeinheit (1) ausgegeben wird.

## Revendications

**1.** Appareil de mesure pour effectuer une mesure d'un déplacement rectiligne ou d'un déplacement de rotation d'un objet, comprenant :

un dispositif de traitement de signal externe (4) ;

un organe de mesure (1) pour délivrer en sortie un signal de déplacement en réaction au déplacement rectiligne ou au déplacement de rotation de l'objet, ledit organe de mesure (1) étant apte à être déconnecté/connecté du/au dispositif de traitement de signal externe (4) par voie de signal, et étant adapté pour délivrer en sortie le signal de déplacement vers le dispositif de traitement de signal connecté (4) ; et

un moyen de mémoire (1a) prévu dans ledit organe de mesure (1), ledit moyen de mémoire (1a) étant apte à stocker au moins des informations de gestion qui appartiennent au dit organe de mesure (1), et au moins les informations de gestion pouvant être extraites dudit moyen de mémoire (1a) au moyen d'un accès depuis le dispositif de traitement de signal externe (4),

**caractérisé en ce que**
ledit dispositif de traitement de signal externe (4) comprend un organe de gestion (4a) possédant une fonction de détection consistant à obtenir les informations d'erreur en comparant les signaux de sortie provenant dudit organe de mesure (1) et d'un prototype de mesure (3), ainsi qu'une fonction de commande pour commander l'écriture des informations d'erreur dans ledit moyen de mémoire (1a) dudit organe de mesure (1) en tant qu'informations de gestion, et pour extraire les informations de gestion de celui-ci.

**2.** Appareil de mesure selon la revendication 1, dans lequel ledit moyen de mémoire (1a) peut conserver le contenu de mémoire sans aucune alimentation en énergie, et le contenu dudit moyen de mémoire (1a) peut, de façon arbitraire, être réinscrit et complété.

**3.** Appareil de mesure selon la revendication 1, dans lequel ledit moyen de mémoire (1a) stocke de façon non réinscriptible des informations de gestion déterminées à la fabrication dudit organe de mesure (1) ou stocke des informations de gestion qui sont réinscrites ou ajoutées par le dispositif de traitement de signal externe (4) en fonction d'une condition d'utilisation.

**4.** Appareil de mesure selon la revendication 1, dans lequel les informations de gestion comprennent au moins une des informations de date de fabrication, de numéro de fabrication ainsi que de pièces dudit organe de mesure (1).

**5.** Appareil de mesure selon la revendication 1, dans lequel les informations de gestion comprennent des informations qui appartiennent audit organe de mesure (1) et évoluent au cours d'un laps de temps.

**6.** Appareil de mesure selon la revendication 1, dans lequel les informations de gestion comprennent des informations systématiques du temps d'alimentation en énergie dudit organe de mesure (1).

**7.** Appareil de mesure selon la revendication 1, dans lequel le signal de déplacement délivre un signal périodique en réaction au déplacement rectiligne ou au déplacement de rotation au dispositif de traitement de signal externe (4), et les informations de gestion comprennent des informations d'erreur systématique lorsque ledit organe de mesure (1) est mesuré en utilisant un prototype de mesure (3).

8. Appareil de mesure selon la revendication 1, dans lequel ledit moyen de mémoire stocke les informations d'une erreur systématique du signal de déplacement délivré en sortie dudit organe de mesure (1) en tant qu'information de gestion.

# FIG. 1

# FIG. 2

( E ($\theta$) IN EQUATION (2) )

30

31

9

0

$0°$

33
( PHASE OFFSET IN EQUATION (2) )

32
AMPLITUDE A₁ IN
EQUATION (2)

$360°$

# FIG. 3

| $0°$ | $1°$ | . . . . . . . . . . . . . . . . . . . . . . . . . . | $358°$ | $359°$ |
|------|------|---------------------------------------------------|--------|--------|
| 10   | 11   | . . . . . . . . . . . . . . . . . . . . . . . . . | 9      | 10     |

## FIG. 4

| 1997.10.10 | 970010 | A001 | . . . . . . . . . |
|---|---|---|---|

18    19    20

## FIG. 5

# FIG. 6

ACTIVATION

S1
TAKE ACCUMULATIVE VALUE
OF ENERGIZING TIME FROM
MEMORY MEANS 1a

S2
OPERATION
END ?

YES → 

NO

S3
MEASURE TIME

S4
ONE HOUR HAS
PASSED ?

NO

YES

S5
ADD ONE HOUR AND WRITE
ON MEMORY MEANS 1a

S6
WRITE INFORMATION
UPON OPERATION FROM
CONTROL DEVICE 4b ON
MEMORY MEANS 1a

END